Europäisches Patentamt

European Patent Office

Office européen des brevets

(19)

(11) **EP 0 704 783 B1**

(12) **FASCICULE DE BREVET EUROPEEN**

(45) Date de publication et mention
de la délivrance du brevet:
**13.01.1999 Bulletin 1999/02**

(51) Int Cl.⁶: **G05D 1/00**

(21) Numéro de dépôt: **95402142.4**

(22) Date de dépôt: **25.09.1995**

(54) **Système pour l'élaboration à bord d'un aéronef d'un signal d'information, alerte ou alarme en cas d'anomalie pendant le décollage**

Vorrichtung an Bord eines Luftfahrzeuges zur Erzeugung eines Informations-, Warn-, oder Alarmsignales im Fall eines Fehlers während des Starts

System for generating, in an aircraft, an information, warning or alarm signal in case of an abnormality during take-off

(84) Etats contractants désignés:
**DE GB NL**

(30) Priorité: **28.09.1994 FR 9411574**

(43) Date de publication de la demande:
**03.04.1996 Bulletin 1996/14**

(73) Titulaire: **AEROSPATIALE SOCIETE NATIONALE INDUSTRIELLE**
**75016 Paris (FR)**

(72) Inventeurs:
• **Coquin, Laurent**
  **F-31400 Toulouse (FR)**
• **Le Draoullec, Christiane**
  **F-31830 Plaisance du Touch (FR)**

(74) Mandataire: **Bonnetat, Christian**
**CABINET BONNETAT**
**29, rue de St. Pétersbourg**
**75008 Paris (FR)**

(56) Documents cités:
**WO-A-85/01372          FR-A- 2 650 101**
**US-A- 4 773 015**

• **NTIS TECH NOTES, 1 Mars 1991 page 292 XP 000227031 E.W. MILLEN, L.H. PERSON 'SYSTEM PREDICTS CRITICAL RUNWAY PERFORMANCE PARAMETERS'**
• **JOURNAL OF GUIDANCE AND CONTROL AND DYNAMICS, vol. 12, no. 5, 1 Septembre 1989 pages 640-646, XP 000085783 MIDDLETON D B ET AL 'EVALUATION OF A TAKEOFF PERFORMANCE MONITORING SYSTEM DISPLAY'**

## Description

La présente invention concerne un système pour l'élaboration à bord d'un aéronef d'un signal d'information, alerte ou alarme en cas d'anomalie pendant le décollage.

La procédure de décollage, depuis le lâcher des freins jusqu'à l'envol de l'aéronef, constitue une phase délicate de l'exploitation de l'aéronef, pendant laquelle, du fait de pertes de performance, de changements en ce qui concerne la direction et l'intensité du vent, ou pour d'autres raisons, des accidents ou incidents, dont la probabilité a été évaluée à environ $10^{-6}$ par décollage, peuvent avoir lieu. En conséquence, il est nécessaire, pour améliorer la sécurité, de fournir à l'équipage, en temps voulu, des informations sûres et précises lui permettant de décider si la procédure de décollage doit être interrompue ou corrigée et, cela, avant que l'aéronef roulant sur la piste n'atteigne une vitesse critique V1, obtenue par un calcul théorique, définie comme la vitesse jusqu'à laquelle le décollage peut être interrompu et au-delà de laquelle le décollage doit être poursuivi.

On connaît déjà, par le brevet FR-2 650 101 de la demanderesse, un tel système pour l'élaboration à bord d'un aéronef d'un signal d'information, alerte ou alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, comportant :

- des moyens pour calculer l'expression :

$$D_1 = D_1 t + (Vat^2 - V_{11}t^2) / 2\gamma_1 t$$

dans laquelle :

- $\gamma_1 t$ est l'accélération réelle, à l'instant $\underline{t}$, de l'aéronef,
- $V_{11}t$ est la vitesse réelle, à l'instant $\underline{t}$, de l'aéronef,
- Vat est la vitesse théorique, à l'instant $\underline{t}$, de l'aéronef,
- $D_1 t$ est la distance réelle parcourue, à l'instant $\underline{t}$, par l'aéronef, et
- $D_1$ est la distance réelle prévue, parcourue par l'aéro nef lorsque $V_{11}t$ sera égale à Vat,

ainsi que le rapport :

$$D_1 / Dat$$

dans lequel :

- $D_1$ est tel que défini ci-dessus, et
- Dat est la distance théorique parcourue, à l'instant $\underline{t}$, par l'aéronef ;

- des moyens de traitement du signal d'information, alerte ou alarme comprenant des moyens pour comparer le rapport $D_1 / Dat$ à un seuil prédéterminé S garantissant une distance minimale de sécurité, notamment pour le freinage et l'arrêt de l'aéronef ; et
- des moyens d'information, alerte ou alarme susceptibles d'émettre un signal d'information, alerte ou alarme lorsque ledit rapport $D_1 / Dat$ est supérieur ou égal audit seuil.

Le système du brevet FR-2 650 101 permet ainsi d'élaborer, à bord d'un aéronef, un signal d'information, alerte ou alarme en cas d'anomalie pendant le décollage. Ce signal n'est délivré que lorsque la vitesse de l'avion et la distance qu'il a parcourue sur la piste sont, respectivement, inférieures à la vitesse de décision (vitesse critique V1) et à la distance théorique parcourue qui lui est associée, pour permettre, si nécessaire, une interruption du décollage en toute sécurité.

Toutefois, avec un tel système, la transition entre le moment pour lequel une interruption du décollage est encore possible et le moment pour lequel elle n'est plus possible, est brutale. A un instant donné, le système ne fournit plus d'indications au pilote de l'aéronef. Or, le pilote ne sait pas exactement à quel moment cette transition va intervenir. Par ailleurs, en cas de problème, le pilote ne connaît à aucun moment la marge de freinage dont il dispose.

A titre d'exemple, nous supposerons qu'une alarme se produise avant V1. Par définition, une interruption du décollage est encore possible. L'aéronef n'a pas encore atteint la vitesse critique et la distance réelle parcourue par l'aéronef n'est pas encore supérieure de plus du seuil prédéfini (par exemple 15%) à la distance théorique qu'il devrait avoir parcourue. Toutefois, elle le sera très prochainement puisqu'une alarme a été déclenchée. Si le pilote ne réagit pas immédiatement, rien ne lui garantit qu'il pourra effectivement arrêter l'aéronef dans la limite des distances imparties.

La présente invention a pour but d'éviter ces inconvénients et concerne un système, du type précédemment défini, perfectionné pour fournir au pilote de nouvelles informations lui permettant d'affiner son jugement quant à la poursuite, ou non, de la procédure de décollage en cas d'anomalie.

A cet effet, le système pour l'élaboration à bord d'un aéronef d'un signal d'information, alerte ou alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, du type comportant :

- des premiers moyens pour calculer l'expression :

$$D_1 = D_1 t + (Vat^2 - V_{11}t^2) / 2\gamma_1 t$$

dans laquelle :

- $\gamma_1 t$ est l'accélération réelle, à l'instant $\underline{t}$, de l'aéronef,
- $V_{11}t$ est la vitesse réelle, à l'instant $\underline{t}$ de l'aéronef,
- Vat est la vitesse théorique, à l'instant $\underline{t}$, de l'aéronef,
- $D_1 t$ est la distance réelle parcourue, à l'instant $\underline{t}$, par l'aéronef, et
- $D_1$ est la distance réelle prévue, parcourue par l'aéro nef lorsque $V_{11}t$ sera égale à Vat,

ainsi que le rapport :

$$D_1 / Dat$$

dans lequel :

- $D_1$ est tel que défini ci-dessus, et
- Dat est la distance théorique parcourue, à l'instant $\underline{t}$, par l'aéronef ;

- des premiers moyens pour comparer le rapport $D_1 / Dat$ à un seuil prédéterminé S ; et
- des moyens d'information, alerte ou alarme ;

est remarquable, selon l'invention, en ce qu'il comprend de plus :

- des deuxièmes moyens pour calculer l'expression :

$$D_{stop} = D_1 t + V_{11}t (\Delta T1 + \Delta T2) - 1/\gamma P [\gamma ct/\gamma P (ln|\gamma ct|-1)$$

$$+V_{11}t \, ln|\gamma bt| - \gamma bt/\gamma P (ln|\gamma bt|-1)]$$

dans laquelle, outre les paramètres déjà définis ci-dessus :

- $\Delta T1$ est le temps de réaction du pilote de l'aéronef,
- $\Delta T2$ est le temps de mise en action des moyens de freinage,
- $\gamma bt$ est l'accélération de l'aéronef en début de freinage,
- $\gamma ct$ est l'accélération de l'aéronef en fin de freinage,
- $\gamma p = (\gamma bt - \gamma ct) / V_{11}t$,
- $D_{stop}$ représente la position sur la piste où l'aéronef doit s'arrêter si le pilote décide d'interrompre immédiatement la procédure de décollage, c'est-à-dire est représentative de la distance d'arrêt de l'aéronef pendant la phase d'accélération de ce dernier au décollage ;

- des seconds moyens pour comparer $D_{stop}$ à la longueur de piste L disponible afin de déterminer si une interruption du décollage est encore possible ;

- lesdits moyens d'information, alerte ou alarme étant activés en fonction des informations fournies par lesdits premiers et seconds moyens de comparaison, pour permettre au pilote de décider s'il doit poursuivre, ou non, la procédure de décollage.

Ainsi, en calculant en permanence, notamment pendant la phase d'accélération de l'aéronef au décollage, la distance requise par l'aéronef (y compris la distance déjà parcourue) pour s'arrêter et en la comparant à la longueur de piste disponible, le pilote a à sa disposition une information permanente sur la marge au freinage et, par conséquent, sur le temps de décision dont il dispose. Par exemple, en cas de problème lors d'un décollage avec une poussée inférieure à la poussée maximale, si le pilote dispose encore d'une marge de décision importante, il pourra notamment tenter de rétablir la pleine poussée de décollage, quitte à interrompre le décollage un peu plus tard si l'augmentation de poussée ainsi fournie n'est pas suffisante pour retrouver une situation saine.

Avantageusement, le système comprend des troisièmes moyens pour calculer l'expression :

$$V_{max} = \sqrt{V_{11}t^2 - 2\gamma bt \, (L - D_{stop})},$$

$V_{max}$ étant la vitesse maximale de l'aéronef lui permettant, à partir de sa position actuelle, de s'arrêter au bout de la piste, et cela en phase d'accélération.

De préférence, le système comprend des quatrièmes moyens pour calculer les expressions :

$$V_{min} = \sqrt{Vat^2 + 2\gamma_1 t \, (D_1 t - S.Dat)},$$

et

$$D_{min} = D_1 t - (V_{11}t^2 - V_{min}^2) / 2\gamma_1 t$$

dans lesquelles :

- $V_{min}$ est la vitesse minimale de l'aéronef lui permettant, à partir de sa position actuelle $D_1 t$ et à accélération constante $\gamma_1 t$ positive, d'atteindre D1 à S.Dat,
- $D_{min}$ est la distance minimale parcourue par l'aéronef à la vitesse $V_{min}$ lui permettant d'atteindre, à accélération constante $\gamma_1 t$ positive, la position $D_1 t$ à la vitesse $V_{11}t$, toujours en phase d'accélération.

Selon une autre caractéristique de l'invention, le système comprend des cinquièmes moyens pour calculer l'expression :

$$D_{stop}' = D_1 t - (V_{11}t^2) / 2\gamma_1 t,$$

$D_{stop}'$ représentant la position sur la piste où l'aéronef doit s'arrêter lorsque celui-ci est déjà en phase de freinage, c'est-à-dire après interruption de la procédure de décollage ($\gamma_1 t < 0$). Cela permet, une fois que le pilote a entrepris d'interrompre le décollage, de l'aider à bien gérer le freinage de l'aéronef, en lui indiquant en permanence la position sur la piste où l'aéronef va s'arrêter et, donc, la distance de piste restante (marge au freinage).

Dans ce dernier cas, on peut prévoir des sixièmes moyens pour calculer l'expression :

$$V_{max}' = \sqrt{-2\gamma_1 t \, (L - D_1 t)},$$

$V_{max}'$ étant la vitesse maximale de l'aéronef lorsque celui-ci est en phase de freinage ($\gamma_1 t < 0$) lui permettant, à partir de sa position actuelle, de s'arrêter au bout de la piste.

Les figures du dessin annexé feront bien comprendre comment l'invention peut être réalisée. Sur ces figures, des références identiques désignent des éléments semblables.

La figure 1 est un schéma synoptique d'un exemple de réalisation du système selon l'invention.

La figure 2 est un schéma illustrant le calcul d'informations fournies par le système selon l'invention, ainsi que les affichages en résultant.

La figure 3 est un schéma synoptique illustrant le principe du calcul de l'accélération théorique.

La figure 4 est un schéma illustrant le calcul d'informations supplémentaires fournies par le système selon l'invention pendant la phase d'accélération au décollage de l'aéronef.

La figure 5 est un schéma illustrant le calcul d'informations fournies par le système selon l'invention pendant la phase de freinage de l'aéronef.

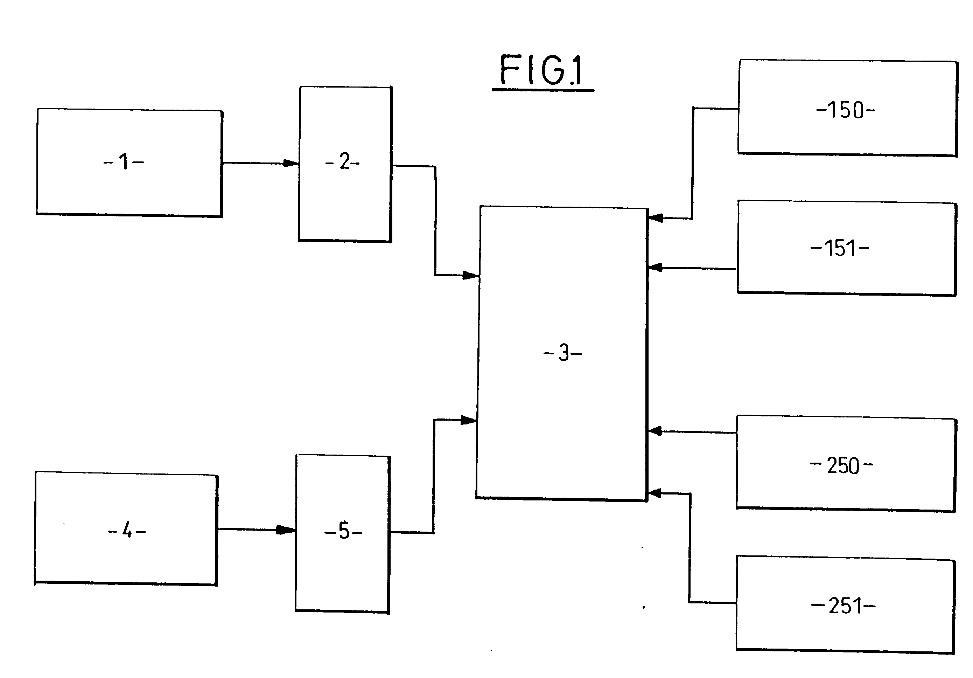

En regard de la figure 1, un système pour l'élaboration à bord d'un aéronef d'un signal d'information, alerte ou alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, comporte :

- des premiers moyens 1 pour calculer l'expression :

$$D_1 = D_1 t + (Vat^2 - V_{11}t^2) / 2\gamma_1 t$$

dans laquelle :

- $\gamma_1 t$ est l'accélération réelle, à l'instant $\underline{t}$, de l'aéronef,
- $V_{11}t$ est la vitesse réelle, à l'instant $\underline{t}$, de l'aéronef,
- Vat est la vitesse théorique, à l'instant $\underline{t}$, de l'aéronef,
- $D_1 t$ est la distance réelle parcourue, à l'instant $\underline{t}$, par l'aéronef, et
- $D_1$ est la distance réelle prévue, parcourue par l'aéronef lorsque $V_{11}t$ sera égale à Vat,

ainsi que le rapport :

$$D_1 / Dat$$

dans lequel :

- $D_1$ est tel que défini ci-dessus, et
- Dat est la distance théorique parcourue, à l'instant $\underline{t}$, par l'aéronef ;

- des premiers moyens 2 pour comparer le rapport $D_1 / Dat$ à un seuil prédéterminé S ; et
- des moyens 3 d'information, alerte ou alarme.

Comme déjà indiqué, cela est généralement connu par le brevet FR-2 650 101 précité.
Plus particulièrement, selon l'invention, ledit système comprend de plus :

- des deuxièmes moyens 4 pour calculer l'expression :

$$D_{stop} = D_1 t + V_{11}t (\Delta T1 + \Delta T2) - 1/\gamma P [\gamma ct/\gamma P (ln|\gamma ctl-1)$$

$$+ V_{11}t \ ln|\gamma btl - \gamma bt/\gamma P (ln|\gamma btl-1)]$$

dans laquelle, outre les paramètres déjà définis ci-dessus :

- $\Delta T1$ est le temps de réaction du pilote de l'aéronef,
- $\Delta T2$ est le temps de mise en action des moyens de freinage,
- $\gamma bt$ est l'accélération de l'aéronef en début de freinage,
- $\gamma ct$ est l'accélération de l'aéronef en fin de freinage,
- $\gamma P = (\gamma bt - \gamma ct) / V_{11}t$,
- $D_{stop}$ représente la position sur la piste où l'aéronef doit s'arrêter si le pilote décide d'interrompre immédiatement la procédure de décollage, c'est-à-dire est représentative de la distance d'arrêt de l'aéronef pendant la phase d'accélération de ce dernier au décollage ;

- des seconds moyens 5 pour comparer $D_{stop}$ à la longueur de piste L disponible afin de déterminer si une interruption du décollage est encore possible.

Comme on le verra plus en détail par la suite, les moyens 3 d'information, alerte ou alarme sont activés en fonction des informations fournies par lesdits premiers 2 et seconds 5 moyens de comparaison, pour permettre au pilote de décider s'il doit poursuivre, ou non, la procédure de décollage.

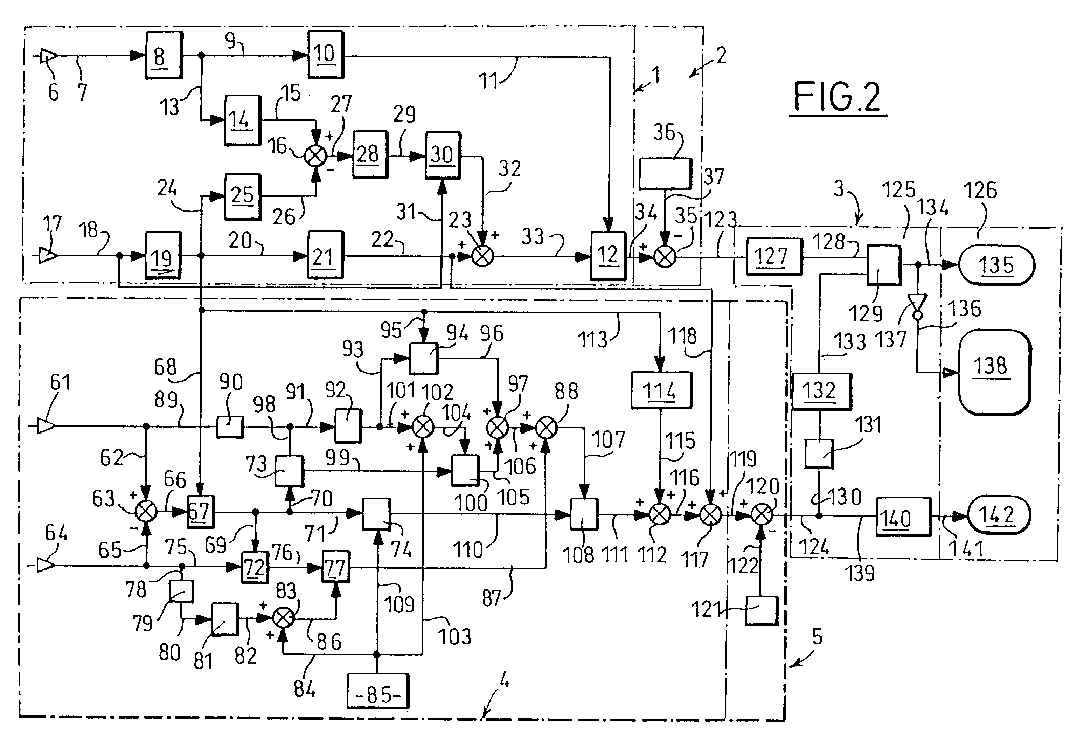

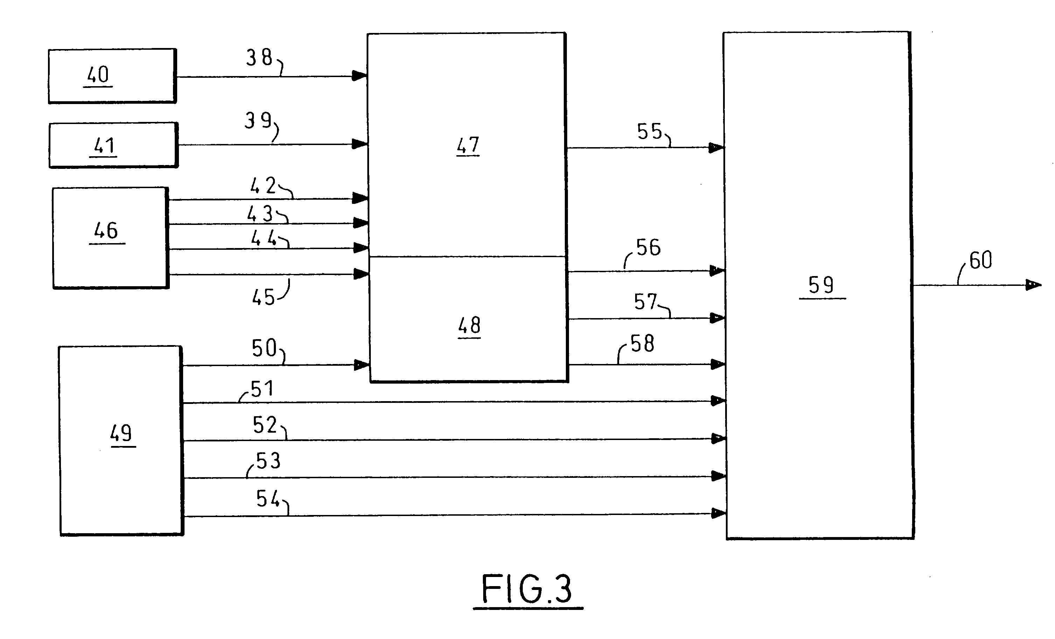

Les premiers moyens de calcul 1 seront décrits plus précisément ci-après en regard de la figure 2. L'accélération théorique $\gamma at$, dont la détermination sera explicitée par la suite en regard de la figure 3, issue de 6 et acheminée par la liaison 7, est appliquée à l'entrée d'un intégrateur 8, susceptible de fournir à sa sortie la vitesse théorique Vat, laquelle est appliquée, par la liaison 9, à un intégrateur 10 susceptible de fournir à sa sortie la distance théorique Dat, laquelle est appliquée à son tour, par la liaison 11, à l'entrée, correspondant au dénominateur, d'un diviseur 12. De plus, par la liaison 13, la vitesse théorique Vat est appliquée à un calculateur 14 susceptible de fournir à sa sortie la valeur $Vat^2$ appliquée, par la liaison 15, à l'entrée positive d'un soustracteur 16.

De même, l'accélération réelle $\gamma_1 t$, issue de 17 et acheminée par la liaison 18, est appliquée à l'entrée d'un intégrateur 19, susceptible de fournir à sa sortie la vitesse réelle $V_{11}t$, laquelle est appliquée, par la liaison 20, à un intégrateur 21 susceptible de fournir à sa sortie la distance réelle $D_1 t$, laquelle est appliquée, par la liaison 22, à l'une des entrées d'un additionneur 23. Par ailleurs, par la liaison 24, la vitesse réelle $V_{11}t$ est appliquée à un calculateur 25 susceptible de fournir à sa sortie la valeur $V_{11}t^2$ appliquée, par la liaison 26, à l'entrée négative du soustracteur 16.

Le soustracteur 16, qui fournit à sa sortie la valeur $(Vat^2 - V_{11}t^2)$, est relié, par la liaison 27, à un calculateur 28 susceptible de fournir à sa sortie la valeur $(Vat^2 - V_{11}t^2)/2$, laquelle est appliquée, par la liaison 29, à l'entrée, correspondant au numérateur, d'un diviseur 30. De plus, l'accélération réelle $\gamma_1 t$ est appliquée, par la liaison 31, à l'entrée, correspondant au dénominateur du diviseur 30. La sortie du diviseur 30, fournissant la valeur $(Vat^2 - V_{11}t^2)/2\gamma_1 t$, est reliée, par la liaison 32, à l'autre entrée de l'additionneur 23, fournissant, à sa sortie, la valeur $D_1 = D_1 t + (Vat^2 - V_{11}t^2)/2\gamma_1 t$, laquelle est acheminée, par la liaison 33, à l'entrée, correspondant au numérateur, du diviseur 12 fournissant à sa sortie la valeur $D_1/Dat$.

Dans les premiers moyens de comparaison 2, le rapport $D_1/Dat$ est fourni, par la liaison 34, à l'entrée positive d'un soustracteur 35, lequel reçoit, à son entrée négative, la valeur de seuil prédéterminé S (notamment égale à 1,15), provenant de 36 par la liaison 37.

La figure 3 montre schématiquement comment l'accélération théorique $\gamma at$ peut être déterminée. D'une part, les régimes N1 des moteurs théorique 38 et réel 39 sont fournis à partir du FADEC ("Full-Authority-Demand-Engine-Control") 40 et des moteurs 41 et, d'autre part, la température ambiante 42, la pression ambiante 43, le Mach 44 et VTAS 45 sont fournis à partir du système ADC/IRS ("Air-Data-Computer" / "Inertial-Reference-System") 46, pour engendrer un modèle de propulsion 47 et un modèle aérodynamique 48. Par ailleurs, à partir du bloc 49 correspondant aux entrées fournies par le pilote, on peut obtenir la position des becs et des volets 50 (fournie au modèle aérodynamique 48), la masse 51, la longueur de piste 52, la pente de la piste 53 et l'état de la piste 54. En sortie du modèle de propulsion, on obtient la poussée 55, en sortie du modèle aérodynamique, VTAS 56, la portance de l'aéronef (Rz) 57 et la traînée de l'aéronef (Rx) 58. Ces différents paramètres, ainsi que les paramètres précités 51 à 54, sont fournis à un dispositif de traitement 59 qui, sur la base de lois mécaniques et d'un modèle de roulement, fournit, en sortie 60, l'accélération théorique $\gamma at$.

En outre, on notera que, d'une part, l'accélération réelle $\gamma_1 t$ est mesurée par la centrale inertielle de l'aéronef et que, d'autre part, les accélérations théoriques de début de freinage $\gamma bt$ et de fin de freinage $\gamma ct$ sont calculées de la même façon que $\gamma at$, avec les hypothèses suivantes :

- pour le calcul de $\gamma bt$, on suppose que le régime des moteurs est le régime réduit (N1 ralenti),
- pour le calcul de $\gamma ct$, on suppose que le régime des moteurs est le régime réduit et que la vitesse de l'aéronef est nulle.

De nouveau en regard de la figure 2, l'accélération de début de freinage $\gamma bt$, issue de 61 et acheminée par la liaison 62, est appliquée à l'entrée positive d'un soustracteur 63, tandis que l'accélération de fin de freinage $\gamma ct$, issue de 64 et acheminée par la liaison 65, est appliquée à l'entrée négative du soustracteur 63. Ce dernier, qui fournit à sa sortie la valeur $\gamma bt$-$\gamma ct$, est relié, par la liaison 66, à l'entrée, correspondant au numérateur, d'un diviseur 67. Par ailleurs, l'entrée, correspondant au dénominateur, du diviseur 67, est reliée, par la liaison 68, à la sortie de l'intégrateur 19, de sorte que, à la sortie du diviseur 67, il est fourni la valeur $\gamma bt - \gamma ct / V_{11}t = \gamma P$ qui, par les liaisons respectives 69, 70 et 71, est fournie aux entrées, correspondant à chaque fois au dénominateur, des diviseurs respectifs 72, 73 et 74. A l'entrée, correspondant au numérateur, du diviseur 72, il est appliqué, par la liaison 75, l'accélération de fin de freinage $\gamma ct$. A la sortie du diviseur 72, la valeur obtenue $\gamma ct / \gamma P$ est appliquée, par la liaison 76, à l'entrée d'un multiplicateur 77. Par ailleurs, l'accélération de fin de freinage $\gamma ct$ est appliquée, par la liaison 78, à un multiplicateur 79 par -1 de sa valeur, dont la sortie est appliquée, par la liaison 80, à un calculateur 81 fournissant, en sortie, la valeur $\ln|\gamma ct|$, laquelle est appliquée, par la liaison 82, à une entrée d'un additionneur 83 dont l'autre entrée reçoit, par la liaison 84, la valeur -1 fournie en 85. Par la liaison 86, la valeur $\ln|\gamma ct|$-1 est fournie à l'autre entrée du multiplicateur 77, délivrant, à sa sortie, la valeur $\gamma ct/\gamma P (\ln|\gamma ct|$-1) appliquée, par une liaison 87, à une entrée d'un additionneur 88.

Par ailleurs, l'accélération de début de freinage $\gamma$bt est appliquée, par la liaison 89, à un multiplicateur 90 par -1 de sa valeur, dont la sortie est appliquée, par la liaison 91, à un calculateur 92 fournissant, en sortie, la valeur ln|$\gamma$bt|, laquelle est appliquée par la liaison 93, à une entrée d'un multiplicateur 94 dont l'autre entrée reçoit, par la liaison 95, la valeur $V_{11}$t. La sortie, de valeur $V_{11}$t ln|$\gamma$bt|, du multiplicateur 94 est appliquée, par la liaison 96, à une entrée d'un additionneur 97.

L'accélération de début de freinage $\gamma$bt (multipliée par -1) est également appliquée, par la liaison 98, à l'entrée, correspondant au numérateur, du diviseur 73 fournissant, à sa sortie, la valeur -$\gamma$bt/$\gamma$P, laquelle est appliquée, par la liaison 99, à une entrée d'un multiplicateur 100. La valeur ln|$\gamma$bt| est de plus appliquée, par la liaison 101, à une entrée d'un additionneur 102 dont l'autre entrée reçoit, par la liaison 103, la valeur -1 issue de 85. La valeur ln|$\gamma$bt|-1, en sortie de l'additionneur 102, est appliquée, par la liaison 104, à l'autre entrée du multiplicateur 100, dont la sortie, de valeur -$\gamma$bt/$\gamma$P (ln|$\gamma$bt|-1), est appliquée, par la liaison 105, à l'autre entrée de l'additionneur 97. La valeur en sortie de ce dernier est appliquée, par la liaison 106, à l'autre entrée de l'additionneur 88. En sortie de l'additionneur 88, on obtient donc la valeur : A = $\gamma$ct/$\gamma$P (ln$\gamma$ ct-1) + $V_{11}$t ln$\gamma$ bt -$\gamma$ bt/$\gamma$P (ln$\gamma$ bt-1), appliquée, par la liaison 107, à une entrée d'un multiplicateur 108.

De plus, l'entrée, correspondant au numérateur, du diviseur 74, reçoit, par la liaison 109, la valeur -1 de 85. La sortie, de valeur -1/$\gamma$P, du diviseur 74 est appliquée, par la liaison 110 à l'autre entrée du multiplicateur 108. La valeur -1/$\gamma$P.A, en sortie de ce dernier, est appliquée, par la liaison 111, à une entrée d'un additionneur 112 recevant, à son autre entrée, la valeur $V_{11}$t ($\Delta$T1 + $\Delta$T2) provenant pour $V_{11}$t de l'intégrateur 19 par la liaison 113, laquelle aboutit au calculateur 114 fournissant ladite valeur à sa sortie et l'appliquant, par la liaison 115, à ladite autre entrée. La sortie de l'additionneur 112 est reliée, par une liaison 116, à un additionneur 117 recevant à son autre entrée, de l'intégrateur 21 par la liaison 118, la valeur $D_1$t.

La sortie de l'additionneur 117, valant $D_1$t + $V_{11}$t ($\Delta$T1+$\Delta$T2) -1/$\gamma$P.A = $D_{stop}$, est appliquée, par la liaison 119, à l'entrée positive d'un soustracteur 120, dont l'entrée négative reçoit, de 121 par la liaison 122, le paramètre de longueur de piste L.

Le calcul de la distance D parcourue par l'aéronef pendant la phase de freinage effectif jusqu'à l'arrêt de l'aéronef, c'est-à-dire en excluant la distance parcourue pendant le temps de réaction du pilote ($\Delta$T1) et le temps de mise en action des moyens de freinage ($\Delta$T2), s'effectue de la façon suivante. Pendant cette période de freinage effectif, la vitesse passe de Vbt (vitesse de début de freinage) à 0 et l'accélération passe de $\gamma$bt à $\gamma$ct. Pour le calcul de $\gamma$bt, on suppose qu'au début du freinage effectif, le régime des moteurs est déjà stabilisé sur le régime réduit, ce qui, en fait, ne correspond pas tout à fait à la réalité. On a :

- $\gamma$bt = $\gamma$at (accélération théorique) avec V = Vbt et le régime des moteurs égal au régime réduit,
- $\gamma$ct = $\gamma$at (accélération théorique) avec V = 0 et le régime des moteurs égal au régime réduit.

Pour calculer la distance D de freinage effectif, on suppose que l'on passe des valeurs ($\gamma$= $\gamma$ $\gamma$bt, V = Vbt) aux valeurs ($\gamma$ = $\gamma$ct, V = 0) selon une courbe de forme $\gamma$=aV+b.
On a alors :

$$D= \int_{V=Vbt}^{V=0} (VdV)/(aV+b)=1/a.[V.\ln(aV+b)-(aV+b)/a.\ln(aV+b)-1)]\Big|_{V=Vbt}^{V=0}$$

d'où, si

$$\gamma P = (\gamma bt - \gamma ct) / Vbt$$

$$D=-1/\gamma P [(\gamma ct)/\gamma P.(\ln|\gamma ct|-1)+Vbt.\ln|\gamma bt|-\gamma bt/\gamma P.(\ln|\gamma bt|-1)]$$

avec en fait : Vbt = $V_{11}$t.

La valeur $D_1$/Dat-S obtenue en sortie des premiers moyens 2 de comparaison, ainsi que la valeur $D_{stop}$-L obtenue en sortie des seconds moyens 5 de comparaison sont fournies, par les liaisons respectives 123 et 124, aux moyens 3 d'information, d'alerte ou alarme. Ces derniers comprennent un sous-ensemble de traitement 125 et un sous-ensemble d'affichage 126. La valeur $D_1$/Dat-S passe par un premier opérateur logique 127 fournissant, à sa sortie, la valeur logique 0 si $D_1$/Dat-S ≤ 0 et la valeur logique 1 si $D_1$/Dat-S > 0, ladite valeur logique étant transmise, par une liaison 128, à l'entrée d'un interrupteur 129 commandé par la valeur logique véhiculée par la liaison 133. La valeur $D_{stop}$-L passe, par la liaison 130 et par l'intermédiaire d'un multiplicateur 131 par -1 de sa valeur, par un deuxième opérateur logique 132 fournissant, à sa sortie, la valeur logique 0 si la valeur entrée dans ledit opérateur est négative ou nulle et la valeur logique 1 si la valeur entrée dans ledit opérateur est positive. Cette valeur logique 0 ou 1 est transmise, par la liaison 133, à la commande de l'interrupteur 129, de sorte que, lorsque cette valeur logique est 1, l'interrupteur est passant, et, lorsque cette valeur est 0, l'interrupteur est ouvert. La sortie de l'interrupteur 129 est reliée, par la liaison 134, à un premier affichage 135, affichant, lorsqu'il est activé (valeur logique 1), l'information ARRET ("STOP") et, par la liaison 136 et via un inverseur de valeur logique 137, à un deuxième affichage 138, affichant, lorsqu'il est activé (valeur logique 1), l'information ARRET ou DECOLLAGE ("STOP or GO"). Par ailleurs, la valeur $D_{stop}$-L passe, par la liaison 139, par un troisième opérateur logique 140 fournissant, à sa sortie, la valeur logique 0 si $D_{stop}$-L ≤ 0 et la valeur logique 1 si $D_{stop}$ -L > 0, ladite valeur logique étant appliquée, par une liaison 141, à un troisième affichage 142, affichant, lorsqu'il est activé (valeur logique 1), l'information DECOLLAGE ("GO").

Ainsi, on voit que :

1/ si $D_1$/Dat-S < 0 et $D_{stop}$ - L < 0, l'affichage 138 fournira l'indication ARRET ou DECOLLAGE,
2/ si $D_1$/Dat - S < 0 et $D_{stop}$ - L > 0, l'affichage 142 fournira l'indication DECOLLAGE (les affichages 135 et 138 ne sont pas alimentés),
3/ si $D_1$/Dat-S > 0 et $D_{stop}$ - L < 0, l'affichage 135 fournira l'indication ARRET,
4/ si $D_1$/Dat - S > 0 et $D_{stop}$ - L > 0, l'affichage 142 fournira l'indication DECOLLAGE (les affichages 135 et 138 ne sont pas alimentés).

A nouveau en regard de la figure 1, Le système selon l'invention peut également comprendre des troisièmes moyens 150 pour calculer l'expression :

$$V_{max} = \sqrt{V_{11}t^2 - 2\gamma bt (L - D_{stop})},$$

$V_{max}$ étant la vitesse maximale de l'aéronef en phase accélération lui permettant, à partir de sa position actuelle, de s'arrêter au bout de la piste en cas d'interruption immédiate du décollage ; ainsi que des quatrièmes moyens 151 pour calculer les expressions :

$$V_{min} = \sqrt{Vat^2 + 2\gamma_1 t (D_1 t - S.Dat)},$$

et

$$D_{min} = D_1 t -(V_{11}t^2 - V_{min}^2) / 2\gamma_1 t$$

dans lesquelles :

- $V_{min}$ est la vitesse minimale de l'aéronef en phase accélération lui permettant, à partir de sa position actuelle $D_1 t$ et à accélération constante $\gamma_1 t$ positive, d'atteindre D1 à S.Dat,
- $D_{min}$ est la distance minimale parcourue par l'aéronef à la vitesse $V_{min}$ lui permettant d'atteindre, à accélération constante $\gamma_1 t$ positive, la position $D_1 t$ à la vitesse $V_{11}t$. Lesdites informations peuvent de même être fournies auxdits moyens 3 d'information, d'alerte ou alarme, pour y être affichées.

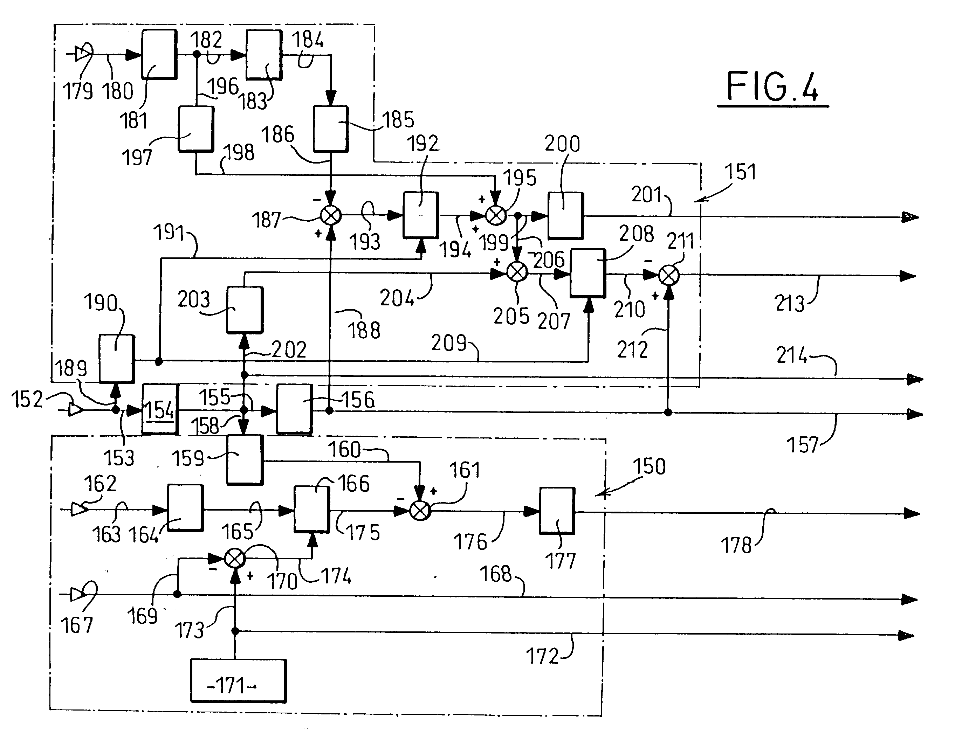

Le calcul de ces différentes expressions, fournissant au pilote de nouvelles informations toujours pendant la phase d'accélération du décollage, est explicité en regard de la figure 4.

Comme précédemment, à partir de l'accélération réelle $\gamma_1 t$, issue de 152 et transmise par la liaison 153 à l'intégrateur 154, on obtient la vitesse réelle $V_{11}t$, appliquée, par la liaison 155 à l'intégrateur 156 fournissant, à sa sortie, la distance réelle parcourue $D_1 t$ en 157. Il est clair que de telles valeurs peuvent être également dérivées de la "branche" correspondante des moyens de calcul montrés sur la figure 2.

Par la liaison 158, la vitesse réelle $V_{11}t$ est appliquée à un calculateur 159 fournissant, à sa sortie, la valeur $V_{11}t^2$, cette dernière étant appliquée, par la liaison 160, à l'entrée positive d'un soustracteur 161. Par ailleurs, l'accélération de début de freinage $\gamma bt$, issue de 162, est appliquée, par la liaison 163, à un calculateur 164 fournissant, à sa sortie,

la valeur $2\gamma bt$, cette dernière étant appliquée, par la liaison 165, à une première entrée d'un multiplicateur 166. De plus, $D_{stop}$, calculée conformément au schéma de la figure 2 et issue de 167, est délivrée, en tant que telle, en 168 et appliquée, par la liaison 169, à l'entrée négative d'un soustracteur 170. La longueur de piste L, issue de 171, est fournie en 172 et appliquée, par la liaison 173, à l'entrée positive du soustracteur 170. La valeur $(L-D_{stop})$ est fournie, par la liaison 174, à l'autre entrée du multiplicateur 166. La valeur $2\gamma bt(L-D_{stop})$, obtenue à la sortie de ce dernier, est appliquée, par la liaison 175, à l'entrée négative du soustracteur 161 pour fournir, en sortie, la valeur $V_{11}t^2 - 2\gamma bt(L-D_{stop})$. Cette dernière est appliquée, par la liaison 176, à un calculateur 177 fournissant, à sa sortie 178, la valeur :

$$\sqrt{V_{11}t^2 - 2\gamma bt\,(L\text{-}D_{stop})} = V_{max}.$$

Comme précédemment, à partir de l'accélération théorique $\gamma at$, issue de 179 et appliquée, par la liaison 180, à l'intégrateur 181, on obtient la vitesse théorique Vat, appliquée, par la liaison 182, à l'intégrateur 183 pour obtenir la distance théorique Dat appliquée, par la liaison 184, au calculateur 185 fournissant, en sortie, la valeur S.Dat (S est le seuil précédemment défini, dont la valeur est par exemple égale à 1,15). Cette dernière est appliquée, par la liaison 186, à l'entrée négative d'un soustracteur 187, à l'entrée positive duquel est appliquée, par la liaison 188, la distance réelle $D_1t$. En outre, l'accélération réelle $\gamma_1 t$ est appliquée, par la liaison 189, à un calculateur 190 fournissant, à sa sortie, la valeur $2\gamma_1 t$. Cette dernière est appliquée, par la liaison 191, à une entrée d'un multiplicateur 192, dont l'autre entrée reçoit, par la liaison 193, la valeur $(D_1t\text{-}S.Dat)$. La valeur $2\gamma_1 t(D_1t\text{-}S.Dat)$, en sortie du multiplicateur 192, est appliquée, par la liaison 194, à une entrée d'un additionneur 195. La vitesse théorique Vat est appliquée, par la liaison 196, à un calculateur 197 fournissant, à sa sortie, la valeur $Vat^2$ appliquée, par la liaison 198, à l'autre entrée de l'additionneur 195. La valeur en sortie de ce dernier, $Vat^2 + 2\gamma_1 t\,(D_1t - S.Dat)$, est appliquée, par la liaison 199, à un calculateur 200, fournissant à sa sortie 201, la valeur :

$$\sqrt{Vat^2 + 2\gamma_1 t\,(D_1t - S.Dat)} = V_{min}.$$

Par ailleurs, la vitesse réelle $V_{11}t$ est appliquée, par la liaison 202, à un calculateur 203 fournissant, à sa sortie, la valeur $V_{11}t^2$, laquelle est appliquée, par la liaison 204, à l'entrée positive d'un soustracteur 205, dont l'entrée négative reçoit, par la liaison 206, la valeur $V_{min}^2$. La valeur $V_{11}t^2 - V_{min}^2$ est appliquée, par la liaison 207, à l'entrée, correspondant au numérateur, d'un diviseur 208, dont l'entrée, correspondant au dénominateur, reçoit, par la liaison 209, la valeur $2\gamma_1 t$. La valeur résultante $(V_{11}t^2\text{-}V_{min}^2)/2\gamma_1 t$ est appliquée, par la liaison 210, à l'entrée négative d'un soustracteur 211, dont l'entrée positive reçoit, par la liaison 212, la valeur $D_1t$. La sortie 213 du soustracteur 211 fournit la valeur :

$$D_1t - (V_{11}t^2 - V_{min}^2)/2\gamma_1 t = D_{min}.$$

La valeur $V_{11}t$ peut être également sortie en 214.

On indiquera ci-après quelques précisions concernant la détermination des expressions précédentes.

$V_{min}$ est la vitesse minimale que l'aéronef doit avoir à l'instant $\underline{t}$ et à la position $D_1t$ pour pouvoir atteindre la vitesse Vat à l'emplacement $D_1 = S.Dat$ à l'instant $t+\Delta t$. On peut donc écrire :

$$V_{11}\,(t + \Delta t) = Vat = V_{min} + \gamma_1 t.\Delta t$$

$$D1\,(t + \Delta t) = Dat.S = D_1t + V_{min}.\Delta t + \tfrac{1}{2}.\gamma_1 t.\Delta t^2$$

d'où :

$$V_{min} = \sqrt{Vat^2 + 2\gamma_1 t\,[D_1t\text{-}Dat.S]}$$

$D_{min}$ est la distance minimale que l'aéronef doit avoir parcourue à $V_{min}$ pour être à $D_1t$ à $V_{11}t$. On a :

$$V_{11}t = V_{min} + \gamma_1 t.\Delta t$$

$$D_1t = D_{min} + V_{min}.\Delta t + \tfrac{1}{2}.\gamma_1 t.\Delta t^2$$

d'où :

$$D_{min} = D_1 t - (V_{11}t^2 - V_{min}^2) / 2\gamma_1 t$$

$V_{max}$ est la vitesse maximale de l'aéronef à $D_1t$ lui permettant encore de s'arrêter sur la piste. Il s'agit donc de la vitesse de l'aéronef à $D_1t$ permettant à ce dernier de s'arrêter au bout de la piste en cas d'interruption immédiate du décollage. La notion de $V_{max}$ utilise simplement le calcul de la distance d'arrêt $D_{stop}$.

En regard de la figure 1, le système selon l'invention peut de plus comprendre des cinquièmes moyens 250 pour calculer l'expression :

$$D_{stop}' = D_1 t - (V_{11}t^2) / 2\gamma_1 t,$$

$D_{stop}'$ représentant la position sur la piste où l'aéronef doit s'arrêter lorsque celui-ci est déjà en phase de freinage, c'est-à-dire après interruption de la procédure de décollage, ainsi que des sixièmes moyens 251 pour calculer l'expression :

$$V_{max}' = \sqrt{-2\gamma_1 t (L - D_1 t)},$$

$V_{max}'$ étant la vitesse maximale de l'aéronef lui permettant, à partir de sa position actuelle, de s'arrêter au bout de la piste. Lesdites informations peuvent de même être fournies auxdits moyens 3 d'information, d'alerte ou alarme, pour y être affichées.

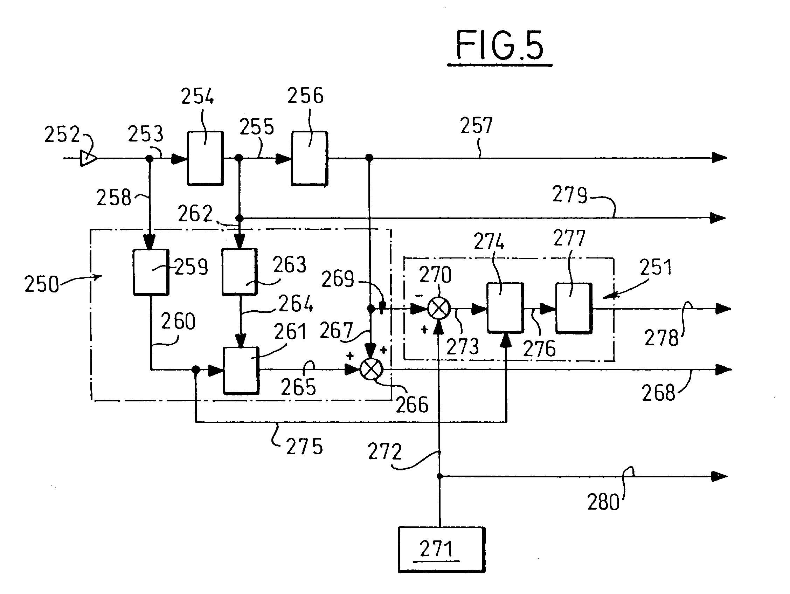

Le calcul de ces deux expressions est explicité en regard de la figure 5.

L'accélération réelle $\gamma_1 t$, issue de 252, est appliquée, par la liaison 253, à l'intégrateur 254 fournissant la vitesse réelle $V_{11}t$ appliquée, par la liaison 255, à l'intégrateur 256 fournissant, en sortie 257, la distance réelle $D_1t$.

Par ailleurs, l'accélération réelle $\gamma_1 t$ est appliquée, par la liaison 258, à un calculateur 259 fournissant, à sa sortie, la valeur $-2\gamma_1 t$, laquelle est appliquée, par la liaison 260, à l'entrée, correspondant au dénominateur, d'un diviseur 261. La vitesse réelle $V_{11}t$ est appliquée, par la liaison 262, à l'entrée d'un calculateur 263 fournissant, à sa sortie, la valeur $V_{11}t^2$, laquelle est appliquée, par la liaison 264, à l'entrée, correspondant au numérateur, du diviseur 261. La valeur $-(V_{11}t^2)/2\gamma_1 t$, issue de ce dernier, est appliquée, par la liaison 265 à une entrée d'un additionneur 266, dont l'autre entrée reçoit, par la liaison 267, la valeur $D_1t$. La sortie 268 de l'additionneur 266 délivre la valeur :

$$D_1 t - (V_{11}t^2) / 2\gamma_1 t = D_{stop}'$$

En outre, la valeur $D_1t$ est appliquée, par la liaison 269, à l'entrée négative d'un soustracteur 270 dont l'entrée positive reçoit la valeur de longueur de piste L, issue de 271, par la liaison 272. En sortie du soustracteur 270, la valeur $L-D_1t$ est appliquée, par la liaison 273, à une entrée d'un multiplicateur 274, dont l'autre entrée reçoit, par la liaison 275, la valeur $-2\gamma_1 t$. La sortie du multiplicateur 274, de valeur $-2\gamma_1 t(L-D_1 t)$, est appliquée, par la liaison 276, à un calculateur 277 fournissant, à sortie 278, la valeur :

$$\sqrt{-2\gamma_1 t (L-D_1 t)} = V_{max}'$$

Les valeurs $V_{11}t$ et L peuvent être sorties, respectivement, en 279 et 280.

On donnera ci-après quelques précisions concernant la détermination des expressions précédentes (phase de freinage).

En phase de freinage, la distance d'arrêt $D_{stop}'$ n'est calculée que si l'aéronef est passé en phase de freinage depuis plus de 5 secondes (cela permet d'éviter de faire les calculs dans les phases transitoires de réduction des régimes des moteurs). A ce moment, on peut considérer que les régimes des moteurs sont stabilisés sur les régimes réduits. Pour calculer la distance d'arrêt, on suppose que l'accélération reste constante et égale à l'accélération réelle. Il s'agit en fait d'une solution optimiste lorsqu'on se place au début du freinage (distance d'arrêt calculée < distance d'arrêt réelle). Toutefois, plus on avance dans la phase de freinage et plus on se rapproche de la réalité.

On obtient donc :

$$V = 0 = V_{11}t + \gamma_1 t + \Delta t$$

$$D_{stop}' = D_1 t + V_{11}t.\Delta t + \tfrac{1}{2}.\gamma_1 t.\Delta t^2$$

soit :

$$D_{stop}' = D_1 t - (V_{11}t^2) / 2\gamma_1 t$$

$V_{max}'$ s'obtient directement à l'aide des équations :

$$V = 0 = V_{max}' + \gamma_1 t.\Delta t$$

$$L = D_1 t + V_{max}'.\Delta t + \tfrac{1}{2}.\gamma_1 t.\Delta t^2$$

d'où :

$$V_{max}' = \sqrt{-2\gamma_1 t (L - D_1 t)}$$

En conclusion, le système selon l'invention permet au pilote de l'aéronef d'anticiper sa décision, de prendre des décisions différentes selon les cas de figure, et de prendre la meilleure décision au meilleur moment.

**Revendications**

1.  Système pour l'élaboration à bord d'un aéronef d'un signal d'information, alerte ou alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, du type comportant :

    -   des premiers moyens (1) pour calculer l'expression :

$$D_1 = D_1 t + (Vat^2 - V_{11}t^2) / 2\gamma_1 t$$

    dans laquelle :

    .   $\gamma_1 t$ est l'accélération réelle, à l'instant $\underline{t}$, de l'aéronef,
    .   $V_{11}t$ est la vitesse réelle, à l'instant $\underline{t}$, de l'aéronef,
    .   $Vat$ est la vitesse théorique, à l'instant $\underline{t}$, de l'aéronef,
    .   $D_1 t$ est la distance réelle parcourue, à l'instant $\underline{t}$, par l'aéronef, et
    .   $D_1$ est la distance réelle prévue, parcourue par l'aéronef lorsque $V_{11}t$ sera égale à $Vat$,

    ainsi que le rapport :

$$D_1 / Dat$$

    dans lequel :

    .   $D_1$ est tel que défini ci-dessus, et

. Dat est la distance théorique parcourue, à l'instant $\underline{t}$, par l'aéronef ;

- des premiers moyens (2) pour comparer le rapport $D_1$ / Dat à un seuil prédéterminé S ; et
- des moyens (3) d'information, alerte ou alarme ;

caractérisé en ce qu'il comprend de plus :

- des deuxièmes moyens (4) pour calculer l'expression :

$$D_{stop} = D_1 t + V_{11} t\, (\Delta T1 + \Delta T2) - 1/\gamma P\, [\gamma ct/\gamma P\, (ln|\gamma ctl\text{-}1) + V_{11} t\, ln|\gamma btl - \gamma bt/\gamma P\, (ln|\gamma btl\text{-}1)]$$

dans laquelle, outre les paramètres déjà définis ci-dessus :

. $\Delta T1$ est le temps de réaction du pilote de l'aéronef,
. $\Delta T2$ est le temps de mise en action des moyens de freinage,
. $\gamma bt$ est l'accélération de l'aéronef en début de freinage,
. $\gamma ct$ est l'accélération de l'aéronef en fin de freinage,
. $\gamma P = (\gamma bt - \gamma ct) / V_{11}t$,
. $D_{stop}$ représente la position sur la piste où l'aéronef doit s'arrêter si le pilote décide d'interrompre immédiatement la procédure de décollage, c'est-à-dire est représentative de la distance d'arrêt de l'aéronef pendant la phase d'accélération de ce dernier au décollage ;

- des seconds moyens (5) pour comparer $D_{stop}$ à la longueur de piste L disponible afin de déterminer si une interruption du décollage est encore possible ;

- lesdits moyens (3) d'information, alerte ou alarme étant activés en fonction des informations fournies par lesdits premiers (2) et seconds (5) moyens de comparaison, pour permettre au pilote de décider s'il doit poursuivre, ou non, la procédure de décollage.

2. Système selon la revendication 1,
   caractérisé en ce qu'il comprend des troisièmes moyens (150) pour calculer l'expression :

$$V_{max} = \sqrt{V_{11}t^2 - 2\gamma bt\,(L - D_{stop})},$$

$V_{max}$ étant la vitesse maximale de l'aéronef en phase accélération lui permettant, à partir de sa position actuelle, de s'arrêter au bout de la piste en cas d'interruption immédiate du décollage.

3. Système selon la revendication 1 ou la revendication 2, caractérisé en ce qu'il comprend des quatrièmes moyens (151) pour calculer les expressions :

$$V_{min} = \sqrt{Vat^2 + 2\gamma_1 t\,(D_1 t - S.Dat)},$$

et

$$D_{min} = D_1 t - (V_{11}t^2 - V_{min}{}^2) / 2\gamma_1 t$$

dans lesquelles :

- $V_{min}$ est la vitesse minimale de l'aéronef en phase accélération lui permettant, à partir de sa position actuelle $D_1 t$ et à accélération constante $\gamma_1 t > 0$, d'atteindre D1 à S.Dat,
- $D_{min}$ est la distance minimale parcourue par l'aéronef à la vitesse $V_{min}$ lui permettant d'atteindre, à accélération constante $\gamma_1 t > 0$, la position $D_1 t$ à la vitesse $V_{11}t$.

4. Système selon l'une quelconque des revendications 1 à 3, caractérisé en ce qu'il comprend des cinquièmes moyens (250) pour calculer l'expression :

$$D_{stop}' = D_1 t - (V_{11}t^2) / 2\gamma_1 t,$$

$D_{stop}'$ représentant la position sur la piste où l'aéronef doit s'arrêter lorsque celui-ci est déjà en phase de freinage, c'est-à-dire après interruption de la procédure de décollage.

5. Système selon la revendication 4,
caractérisé en ce qu'il comprend des sixièmes moyens (251) pour calculer l'expression :

$$V_{max}' = \sqrt{-2\gamma_1 t (L - D_1 t)},$$

$V_{max}'$ étant la vitesse maximale de l'aéronef en phase de freinage (accélération réelle $\gamma_1 t < 0$) lui permettant, à partir de sa position actuelle, de s'arrêter au bout de la piste.

## Claims

1. A system for deriving an information, warning or alarm signal on board an aircraft in the event of an anomaly during take-off, before the aircraft reaches a critical rolling speed up to which the take-off process may be modified or interrupted and beyond which the take-off must be proceeded with, of the type including:

   - first means (1) for calculating the expression:

   $$D_1 = D_1 t + (Vat^2 - V_{11}t^2)/2\gamma_1 t$$

   in which:

   - $\gamma_1 t$ is the actual acceleration of the aircraft at the instant $\underline{t}$,
   - $V_{11}t$ is the actual speed of the aircraft at the instant $\underline{t}$,
   - Vat is the theoretical speed of the aircraft at the instant $\underline{t}$,
   - $D_1 t$ is the actual distance travelled by the aircraft at the instant $\underline{t}$, and
   - $D_1$ is the anticipated actual distance travelled by the aircraft when $V_{11}t$ will be equal to Vat, as well as the ratio:

   $$D_1/Dat$$

   in which:
   - $D_1$ is as defined above, and
   - Dat is the theoretical distance travelled by the aircraft at the instant $\underline{t}$;

   - first means (2) for comparing the ratio $D_1/Dat$ to a predetermined threshold S; and
   - information, warning or alarm means (3);

   characterized in that it furthermore comprises:

   - second means (4) for calculating the expression: $D_{stop} = D_1 t + V_{11}t (\Delta T1 + \Delta T2) - 1/\gamma P [\gamma ct/\gamma P (\ln|\gamma ct|-1) + V_{11}t \ln|\gamma bt| - \gamma bt/\gamma P (\ln|\gamma bt|-1)]$ in which, in addition to the parameters already defined hereinabove:

   - $\Delta T1$ is the reaction time of the aircraft's pilot,
   - $\Delta T2$ is the response time of the braking means,
   - $\gamma bt$ is the acceleration of the aircraft at the start of braking,
   - $\gamma ct$ is the acceleration of the aircraft at the end of braking,
   - $\gamma P = (\gamma bt - \gamma ct) / V_{11}t$,

- $D_{stop}$ represents the position on the runway where the aircraft must stop if the pilot decides to interrupt the take-off procedure immediately, that is to say is representative of the stopping distance of the aircraft during the acceleration phase of the latter at take-off;

- second means (5) for comparing $D_{stop}$ to the length of runway L available so as to determine whether an interruption of the take-off is still possible;
- said information, warning or alarm means (3) being activated depending on the information supplied by said first (2) and second (5) comparison means in order to enable the pilot to decide whether he should continue the take-off procedure or not.

2. The system as claimed in claim 1, characterized in that it comprises third means (150) for calculating the expression:

$$V_{max} = \sqrt{V_{11}t^2 - 2\gamma bt(L - D_{stop})},$$

$V_{max}$ being the maximum speed of the aircraft in the acceleration phase enabling it, from its actual position, to be stopped at the end of the runway in the event of an immediate interruption of the take-off.

3. The system as claimed in claim 1 or claim 2, characterized in that it comprises fourth means (151) for calculating the expressions:

$$V_{min} = \sqrt{Vat^2 - 2\gamma_1 t(D_1 t - S.Dat)},$$

and

$$D_{min} = D_1 t - (V_{11}t^2 - V_{min}^2) / 2\gamma_1 t$$

in which:

- $V_{min}$ is the minimum speed of the aircraft in the acceleration phase enabling it, from its actual position $D_1 t$ and with a constant acceleration $\gamma_1 t > 0$, to reach D1 at S.Dat,
- $D_{min}$ is the minimum distance travelled by the aircraft at the speed $V_{min}$ enabling it to reach, at a constant acceleration $\gamma_1 t > 0$, the position $D_1 t$ at the speed $V_{11}t$.

4. The system as claimed in any of claims 1 to 3, characterized in that it comprises fifth means (250) for calculating the expression:

$$D_{stop}' = D_1 t - (V_{11}t^2) / 2\gamma_1 t,$$

$D_{stop}'$ representing the position on the runway where the aircraft must stop when the latter is already in the braking phase, that is to say after interruption of the take-off procedure.

5. The system as claimed in claim 4, characterized in that it comprises sixth means (251) for calculating the expression:

$$V_{max} = \sqrt{-2\gamma_1 t(L - D_1 t)},$$

$V_{max}'$ being the maximum speed of the aircraft in the braking phase (actual acceleration $\gamma_1 t < 0$) enabling it, from its actual position, to stop at the end of the runway.

**Patentansprüche**

1. Vorrichtung an Bord eines Luftfahrzeugs zur Erzeugung eines Informations-, Warn-, oder Alarmsignales im Falle eines Fehlers während des Starts, bevor das Luftfahrzeug eine kritische Rollgeschwindigkeit erreicht, bis zu der der Startvorgang geändert oder abgebrochen werden kann und bei deren Überschreitung der Start fortgesetzt werden muß, der Art, daß sie umfaßt:

- erste Mittel (1) zur Berechnung des Ausdrucks:

$$D_1 = D_1 t + (Vat^2 - V_{11}t^2)/2\gamma_1 t,$$

in dem sind

- $\gamma_1 t$ die tatsächliche Beschleunigung des Luftfahrzeugs zum Zeitpunkt $\underline{t}$,
- $V_{11}t$ die tatsächliche Geschwindigkeit des Luftfahrzeugs zum Zeitpunkt $\underline{t}$,
- $Vat$ die theoretische Geschwindigkeit des Luftfahrzeugs zum Zeitpunkt $\underline{t}$,
- $D_1 t$ die vom Luftfahrzeug zum Zeitpunkt $\underline{t}$ zurückgelegte tatsächliche Strecke und
- $D_1$ die vorgesehene tatsächliche Strecke, die vom Luftfahrzeug zurückgelegt wird, wenn $V_{11}t$ gleich $Vat$ ist,

sowie des Verhältnisses:

$$D_1/Dat$$

in dem:

- $D_1$ der obigen Definition entspricht und
- $Dat$ die vom Luftfahrzeug zum Zeitpunkt $\underline{t}$ zurückgelegte theoretische Strecke ist;

- erste Mittel (2), um $D_1/Dat$ mit einer vorbestimmten Schwelle S zu vergleichen; und
- Informations-, Warn- oder Alarmmittel (3),

dadurch gekennzeichnet, daß sie weiterhin umfaßt:

- zweite Mittel (4) zur Berechnung des Ausdrucks:

$$D_{stop} = D_1 t + V_{11}t\ (\Delta T1 + \Delta T2) - 1/\gamma P\ [\gamma ct/\gamma P\ (\ln|\gamma ct|-1) + V_{11}t\ \ln|\gamma bt| - \gamma bt/\gamma P\ (\ln|\gamma bt|-1)]$$

in dem neben den oben bereits definierten Parametern sind:

- $\Delta T1$ die Reaktionszeit des Piloten des Luftfahrzeugs,
- $\Delta T2$ die Zeit zur Betätigung der Bremsmittel,
- $\gamma bt$ die Beschleunigung des Luftfahrzeugs bei Bremsbeginn,
- $\gamma ct$ die Beschleunigung des Luftfahrzeugs bei Bremsende,
- $\gamma P = (\gamma bt - \gamma ct)/V_{11}t$,
- $D_{stop}$ die Position auf der Piste, in der das Luftfahrzeug zum Stillstand kommen muß, wenn der Pilot den sofortigen Abbruch des Startvorgangs beschließt, und die somit für die Stoppstrecke des Luftfahrzeugs während seiner Beschleunigungsphase beim Start repräsentativ ist;

- zweite Mittel (5) zum Vergleich von $D_{stop}$ mit der verfügbaren Pistenlänge L, um zu bestimmen, ob ein Abbruch des Starts noch möglich ist;
- wobei die Informations-, Warn- oder Alarmmittel (3) in Abhängigkeit von den Informationen aktiviert werden, die von den ersten Vergleichsmitteln (2) und den zweiten Vergleichsmitteln (5) abgegeben werden, damit der Pilot entscheiden kann, ob die Fortsetzung des Startvorgangs möglich ist oder nicht.

2. Vorrichtung nach Anspruch 1,
dadurch gekennzeichnet, daß sie dritte Mittel (150) zur Berechnung des Ausdrucks:

$$V_{max} = \sqrt{V_{11}t^2 - 2\gamma bt\,(L - D_{stop})},$$

umfaßt, wobei $V_{max}$ die maximale Geschwindigkeit des Luftfahrzeugs in der Beschleunigungsphase ist, bei der es von seiner gegenwärtigen Position aus am Pistenende bei sofortigem Startabbruch zum Stillstand kommen kann.

3. Vorrichtung nach Anspruch 1 oder Anspruch 2,
dadurch gekennzeichnet, daß sie vierte Mittel (151) zur Berechnung der Ausdrücke:

$$V_{min} = \sqrt{Vat^2 + 2\gamma_1 t\,(D_1 t - S.Dat)}$$

und

$$D_{min} = D_1 t - (V_{11}t^2 - V_{min}^2)/2\gamma_1 t$$

umfaßt, in denen sind:

- $V_{min}$ die Mindestgeschwindigkeit des Luftfahrzeugs in der Beschleunigungsphase, bei der es aus seiner gegenwärtigen Position $D_1 t$ bei konstanter Beschleunigung $\gamma_1 t > 0$ $D_1$ bis S.Dat erreichen kann,
- $D_{min}$ die Mindeststrecke, die vom Luftfahrzeug mit der Geschwindigkeit $V_{min}$ zurückgelegt wird, bei der es bei konstanter Beschleunigung $\gamma_1 t > 0$ die Position $D_1 t$ mit der Geschwindigkeit $V_{11}t$ erreichen kann.

4. Vorrichtung nach einem der Ansprüche 1 bis 3,
dadurch gekennzeichnet, daß sie fünfte Mittel (250) zur Berechnung des Ausdrucks:

$$D_{stop}' = D_1 t - (V_{11}t^2)/2\gamma_1 t,$$

umfaßt, wobei $D_{stop}'$ die Position auf der Piste darstellt, in der das Luftfahrzeug zum Stillstand kommen muß, wenn es sich nach Abbruch des Startvorgangs bereits in der Bremsphase befindet.

5. Vorrichtung nach Anspruch 4,
dadurch gekennzeichnet, daß sie sechste Mittel (251) zur Berechnung des Ausdrucks:

$$V_{max}' = \sqrt{-2\gamma_1 t\,(L - D_1 t)}$$

umfaßt, in dem $V_{max}'$ die maximale Geschwindigkeit des Luftfahrzeugs in der Bremsphase (tatsächliche Beschleunigung $\gamma_1 t < 0$) ist, bei der es von seiner gegenwärtigen Position aus am Ende der Piste zum Stillstand kommen kann.

FIG.1

-150-

-151-

-250-

-251-

-3-

-2-

-5-

-1-

-4-

FIG.2

FIG.3

FIG.4

# FIG.5

EP 0 704 783 B1